(19) Europäisches Patentamt
European Patent Office
Office européen des brevets

(11) **EP 1 926 271 A1**

(12) **EUROPEAN PATENT APPLICATION**

(43) Date of publication:
**28.05.2008 Bulletin 2008/22**

(51) Int Cl.:
***H04L 27/26*** (2006.01)

(21) Application number: **06425806.4**

(22) Date of filing: **27.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Nokia Siemens Networks GmbH & Co. KG**
**81541 München (DE)**

(72) Inventors:
• **Dominianni, Matteo**
  **40055 Castenaso (BO) (IT)**
• **Gangai, Cristina**
  **20099 Sesto San Giovanni (IT)**

(54) **Method and system for data mapping**

(57) The present invention is a method and a system for data mapping in a telecommunication system in which data to be transmitted is in form of a tuple of areas to be placed in a bidimensional subplane, having an x-axis (t) and an y-axis (f), of a sub-frame (DL_F); the areas within said tuple are to be placed in form of rectangular shaped areas (B1,..,B5) within a rectangular shaped region of said sub-frame (DL_F) having a predefined width (W) and height (H). The method is an iterative method that at each step maps on the sub-frame (DL_F) the areas still to be mapped in form of rectangular shaped areas (B1,..,B5) of equal or greater areas, having at least one dimension multiple of one of horizontal and vertical dimensions of the remaining free mappable area (A) of the sub-frame (DL_F).

Fig.5a

EP 1 926 271 A1

**(Cont. next page)**

Fig.5b

Fig.5c

Fig.5d

**Description**

The present invention relates to a method according the preamble of claim 1 and to a system according the preamble of claim 11.

In a WiMAX base station, as defined in standard document 802.16e IEEE [1], in case of PUSC subcarrier allocation mode, tight requirements have to be fulfilled for the mapping of downlink data bursts into the downlink transmission data sub-frame. Unfortunately, in order to meet such tight requirements, the optimization of the data mapping process becomes a complex problem especially by taking into account that such optimization is to be performed in real time.

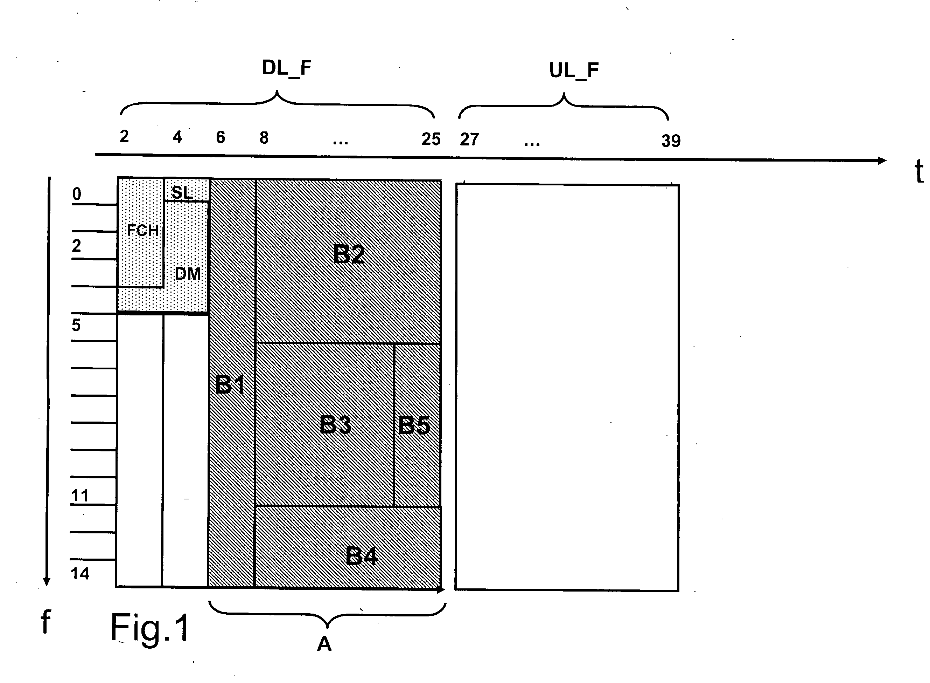

The problems related to the optimization of the data mapping process in state of the art WiMAX systems will be now described in reference to drawings of Figure 1 to Figure 3.

Figure 1 illustrates an exemplary structure of a WiMAX transmission frame in a TDD duplex mode as known in state of the art systems. In the example shown in Figure 1, the duration of the frame is 4 ms with a 5MHz frequency band.

The measure unity of the x-axis t is an OFDMA symbol unit, where an OFDMA symbol unit is the time interval between the transmissions of two consequent modulation symbols over a given subcarrier. The measure unity of the y-axis f is a subchannel. A subchannel is composed of one or more subcarriers, e.g. in PUSC subcarrier allocation mode, each subchannel is composed of 24 subcarriers. In the example shown in Figure 1, the downlink (DL) and uplink (UL) data sub-frames DL_F, UL_F together have the dimension of 39 OFDMA symbols x 15 subchannels.

In the downlink sub-frame (DL_F), a slot SL is the minimum sub-frame unit that is allocable with data and has the dimension of two OFDMA symbols x one subchannel.

In the downlink sub-frame DL_F, a burst or data region B1,.., B5 is a rectangular portion of the sub-frame DL_F that contains PDUs having equal Modulation and Coding Scheme (MCS). On the other hand, in the uplink sub-frame UL_F, uplink bursts, not shown, are not required to have a rectangular shape.

Thus, a first requirement in the mapping of data bursts B1,..,B5 into the DL data sub-frame DL_F is that data bursts B1,..,B5 need to have a rectangular shape.

A downlink map field DM describes the downlink sub-frame allocation structure and is used by each subscriber station to access the downlink bursts among B1, .., B5 in Figure 1 which contain PDUs that the base station sends to that subscriber station. In fact, inside the downlink map field DM, each burst B1, ..,B5 is represented by a sub-field called the downlink MAP Information Element that contains, among other information, a list of the CIDs whose PDUs are contained in the burst B1,..,B5, together with the burst coordinates.

Frame Control Header field FCH contains information on the length of the subsequent downlink MAP field message with the corresponding repetition code.

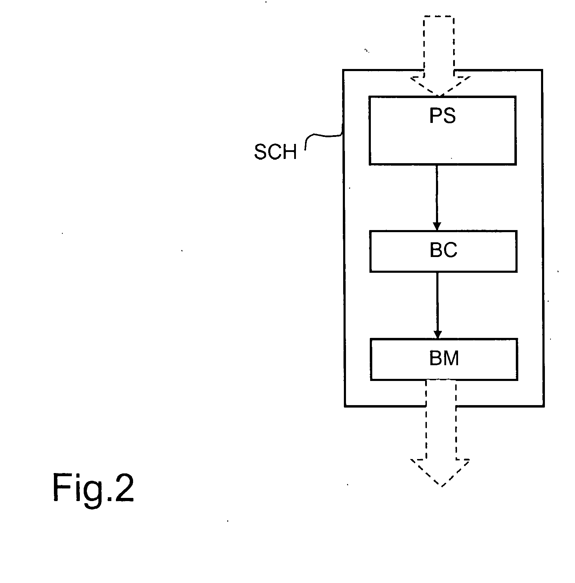

Figure 2 is a schematic block diagram illustrating an example of scheduler architecture within a WiMAX base station at the MAC level.

A scheduler module SCH has the task of selecting data to be transmitted taking into account QoS requirements.

In WiMAX base-stations, it is possible to consider the scheduler SCH as schematically composed of the following three modules: 1) a packet selection module PS, 2) a burst creation module BC and 3) a burst mapping module BM.

The packet selection module PS has the task of selecting data, i.e. SDUs, from CID queues for transmission by taking into account the QoS requirements.

The burst creation module BC receives, as input, SDUs from the packet selection module PS and it has the task of adding to the received SDUs the MAC overhead, thus generating the corresponding PDUs. Then, the burst creation module BC aggregates several PDUs together, having the same MCS scheme; and each set of aggregated PDUs is transmitted in one burst. Thus, the burst creation module BC, by aggregating variable amounts of PDUs for future transmission in the same burst, decides the sizes of the burst areas. The only constraint of the burst creation module is that a burst shall contains PDUs having equal MCS scheme.
The burst creation module BC does not define the height and the width of the bursts, but it only defines their areas.

It is the burst mapping module BM that assigns to the burst areas, the two dimensions, i.e. width and height, so as to create bursts B1,..,B5 having rectangular shapes.

The burst mapping module BM receives as input the sets of aggregated PDUs coming from the burst creation module BC and it has the task of allocating them on the transmission sub-frame DL_F, using one burst for each set and considering a shape of a rectangle for bursts. In this way the burst mapping module BM creates the data burst or data region B1,..,B5 as required by the WiMAX standard, 802.16e IEEE [1].

The present invention optimizes some of the operations of the burst mapping module BM.

In Figure 2, the three sub-modules PS, BC, BM composing the scheduler are logical modules which may or may not reflect a physical implementation. Moreover, in another architecture example the separation of the sub-modules within the scheduler SCH may be different than the one depicted in Figure 2.

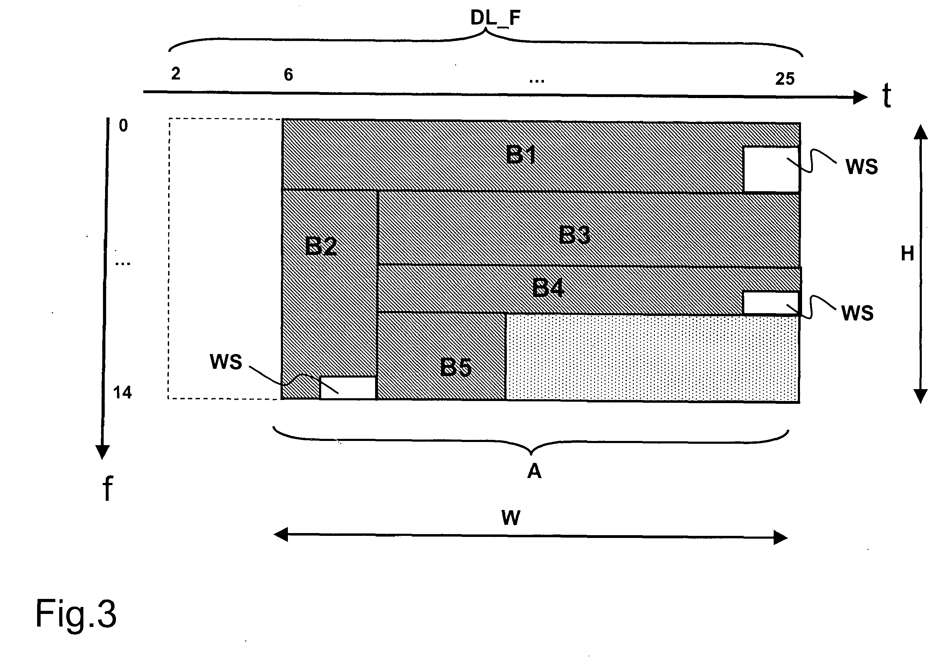

Upon necessity, the burst mapping module BM adds to some bursts B1,..,B5 some empty wasted slots WS (shown in Figure 3) in order to approximate the area defined by the burst creation module BC to an area whose value can be decomposed in two submultiples fitting the sub-frame area A which is free for allocation. These empty slots WS allocated inside the bursts, introduced with the purpose to create areas of a rectangular shape fitting the free sub-frame mappable area A, are wasted slots since they do not contain any data.

Figure 3 is a schematic illustration of mapped areas with data (shaded areas), wasted area inside bursts (white areas), not mapped areas external of bursts (dotted area).

The task performed by the burst mapping module BM can be described as an algorithm having as inputs:

- a tuple containing the burst areas, i.e. the sum of the areas of each set of aggregated PDUs, to be mapped within the mappable area A; and

- dimensions of rectangular mappable area W,H wherein W denotes the sub-frame width and H denotes the sub-frame height (see Figure 3).

Such algorithm has the objective of placing the burst areas on the mappable area A within the sub-frame DL_F while maximizing the area covered with data and minimizing wasted slots WS within bursts B, .., B5.

Moreover,the algorithm has to satisfy some constraints.

A first constraint requires that bursts B1, .., B5 have a shape of rectangles, with integer dimensions and no overlapping is allowed between bursts.

A second constraint requires that, in order to avoid out-of-sequence PDU reception at the receiver, bursts B1, .., B5 are mapped in a way that PDUs of one CID can maintain in transmission the time generation order.

A third constraint requires that bursts B1, .., B5 are mapped taking into account the space occupied by downlink map field DM, whose size increases with the increase of the burst number.

As the second constraints is not required within the burst, i.e. within the burst it is not necessary to guarantee PDUs generation sequence, the second constraint is dealt by requiring that, in the same burst B1,.., B5, all the PDUs belong to the same CID.

The third constraint is dealt by requiring that a fixed space is reserved on the sub-frame DL_F for the downlink map field DM.

Another important constraint is that the whole scheduler SCH has tight execution time requirements, i.e. it shall be executed within a frame period (4 ms in the example of Figure 1 and not more than 20 ms, the maximum frame duration specified by the WiMAX standard document 802.16e IEEE [1]).

In summary, the mapping task can be informally defined as the task of arranging or mapping some data burst areas over a rectangle of a major area, i.e. a transmission frame, using rectangular shapes for the burst areas and deciding orientation, width and height of such rectangles, with the aim of maximizing the mapped area within the frame.

Since the above described burst mapping problem belongs to an NP-Hard complexity class and since there are strict real time requirements for the mapping functionality, i.e. a frame period of few ms, the problem is at best solved via approximation algorithms.

Thus, it is desirable to provide a technique which optimizes the mapping task by maximizing the frame area covered with data while minimizing the number of wasted slots inside bursts. The need for such technique is particularly compelling if tight real-time requirements are taken into account.

Accordingly, the present invention relates to a method and a system for data mapping in a telecommunication system in which data to be transmitted is in form of a tuple of areas to be placed in a bidimensional subplane, having an x-axis and an y-axis, of a sub-frame; the areas within said tuple are to be placed in form of rectangular shaped areas within a rectangular shaped region of said sub-frame having a predefined width and height;

said method characterized in that it is an iterative method that at each step maps on the sub-frame the areas still to be mapped in form of rectangular shaped areas of equal or greater areas, having at least one dimension multiple of one of horizontal and vertical dimensions of a remaining free mappable area of the sub-frame.

Embodiments of the invention may preferably comprise the steps of:

i) defining an horizontal dimension variable, herein after denoted as burst_dim_x, whose value is related to the width of the free mappable area of the sub-frame;

ii) defining a vertical dimension variable, herein after denoted as burst_dim_y, whose value is related to the height of the free mappable area of the sub-frame;

iii) initializing the variables burst_dim_x and burst_dim_y to the predefined sub-frame width and to the predefined sub-frame height respectively;

iv) defining an additional set of tuples of areas obtained from the tuple of areas by adding an integer i to each of the areas of the tuple of areas, wherein the integer i includes the value zero;

v) searching for a tuple of horizontal multiples, herein after denoted as mult_x, by searching for multiples of variable burst_dim_x within the tuple of areas and within the additional set of tuples of areas and by selecting the multiples having minimum integer i; wherein the tuple mult_x is composed of couples <area, i> such that value area+i is a multiple of the variable burst_dim_x;

vi) searching for a tuple of vertical multiples, herein after denoted as mult_y, by searching for multiples of variable burst_dim_y within the tuple of areas and within the additional set of tuples of areas and by selecting the multiples having minimum integer i; wherein the tuple mult_y is composed of couples <area, i> such that value area+i is a multiple of the variable burst_dim_y;

vii) checking whether at least one of the tuples mult_x and mult_y found in steps v) and vi) are non empty;

viii) if step vii) is fulfilled, then step ix) is performed otherwise a jump to step xix) is performed;

ix) checking whether the sum of the areas associated to tuple mult_x is greater than the sum of the areas associated to tuple mult_y;

x) if step ix) is fulfilled then step xi) is performed otherwise a jump to step xv) is performed;

xi) calculating the height of the rectangular shaped areas associated to the tuple mult_x; each of the rectangular shaped areas having a width equal to burst_dim_x value;

xii) mapping the data by placing the rectangular shaped areas horizontally within the free mappable area; and updating the tuple of areas by deleting from it the elements associated to the tuple mult_x;

xiii) updating variable burst_dim_y by subtracting all the heights of the rectangular shaped areas mapped at step xii) ;

xiv) updating variable burst_dim_x by decrementing it of one unit; and performing a jump to step xx);

xv) calculating the width of the rectangular shaped areas associated to the tuple mult_y; each of the rectangular shaped areas having a height equal to burst_dim_y value;

xvi) mapping the data by placing the rectangular shaped areas vertically within the free mappable area; and updating the tuple of areas by deleting from it the elements associated to the tuple mult_y;

xvii) updating variable burst_dim_x by subtracting all the widths of the rectangular shaped areas mapped at step xvi);

xviii) updating variable burst_dim_y by decrementing it of one unit; and performing a jump to step xx);

xix) updating variables burst_dim_x and burst_dim_y by decrementing each of them of one unit; and performing step xx);

xx) checking if terminating condition is not reached;

xxi) if step xx) is fulfilled, then a new iteration is performed starting from step iv).

In embodiments of the invention, the height may preferably be calculated for each area of the tuples of areas associated to tuple mult_x as follows:

$$\texttt{height = (area+i)/burst\_dim\_x.}$$

In embodiments of the invention, in step xv) the width may conveniently be calculated for each area of the tuples of areas associated to tuple mult_x as follows:

$$\texttt{width = (area+i)/burst\_dim\_y.}$$

In embodiments of the invention, the integer i may advantageously set to 0,1,2 and 3.

In embodiments of the invention, said telecommunication system may preferably be a WiMAX system.

In embodiments of the invention, said sub-frame may conveniently be a downlink sub-frame.

In embodiments of the invention, the downlink sub-frame may conveniently follow PUSC subcarrier allocation mode.

In embodiments of the invention, the x-axis unit may be an OFDMA symbol unit and the y-axis unit may be a subchannel unit and a downlink slot may be composed of one subchannel x two OFDMA symbols.

In embodiments of the invention, said termination condition of step xx) may be advantageously fulfilled when said tuple of area is an empty tuple or when any of variables burst_dim_x, burst_dim_y is equal to zero.

The proposed invention allows a greedy approximation of the burst mapping problem.

The proposed invention is applicable to WiMAX systems having a PUSC subcarrier allocation scheme.

The proposed invention embodiments enable very good performances. In fact, simulation results show that up to 80% of the mappable sub-frame area A is covered with data bursts and that the wasted burst area is about 8%.

The proposed invention embodiments have good computational time properties allowing its implementation in real time systems. In fact, the invention embodiments have a computational complexity which grows linearly with the number of input burst areas.

The invention will now be described in preferred but not exclusive embodiments with reference to the accompanying drawings, wherein:

Figure 1    is a chart schematically illustrating an exemplary structure of a WiMAX transmission frame (Prior Art) ;

Figure 2    is a block diagram schematically illustrating an example of scheduler architecture within a WiMAX base station (Prior Art);

Figure 3    is a chart schematically illustrating bursts allocated within a WiMAX transmission sub-frame (Prior Art);

Figure 4    is a flow chart schematically illustrating data mapping according to an advantageous embodiment of the present invention;

Figure 5    is a set of drawings schematically illustrating a simplified numerical example of data mapping according to a further advantageous embodiment of the present invention.

Figures 1, 2 and 3 have already been described in previous sections.

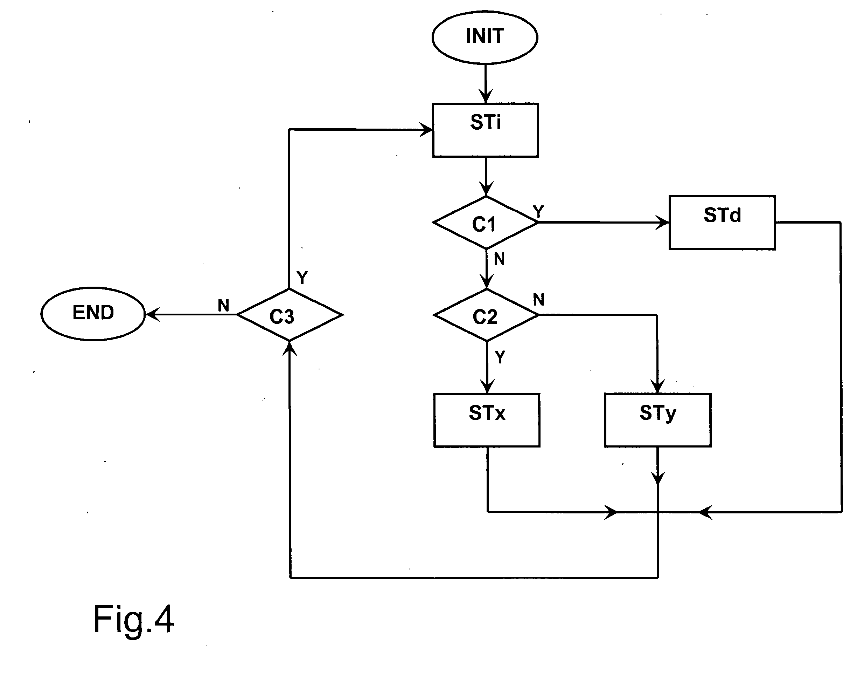

Figure 4 is a flow chart schematically illustrating data mapping according to an advantageous embodiment of the present invention, which is described in term of an algorithm, called multiple areas (MA).

The inputs of the MA algorithm are:

-    a variable in form of vector, denoted as "burst_area_vector" containing the burst areas to be mapped within the mappable area A; and
-    the dimensions of rectangular mappable area W,H.

At initialization step INIT, variables "burst_dim_x" and "burst_dim_y" are assigned with initial values which are, respectively, the two dimensions W,H of the mappable area A of the sub-frame DL_F. Thus, in the initial step INIT, the two following assignments are performed: "burst_dim_x=W" and "burst_dim_y=H".

In step STi, the MA main procedure "mult_vector=find_multiples(burst_area_vector, burst_dim)" is invoked for both the horizontal and the vertical directions. The main procedure "find_multiples" is searching for multiples by creating, from the variable "burst_area_vector", a set of new vectors, e.g. "burst_area_vector+1", "burst_area_vector+2", "burst_area_vector+3". Each of the new vector is obtained from "burst_area_vector" by adding the value i=1,2,3 respectively to each area element of the original "vector burst_area_vector". The index "i" indicates the number of wasted slots WS to be added to each area.
From the original vector "burst_area_vector" and from its set of derived vectors, the procedure "mult_vector=find_multiples(burst_area_vector, burst_dim)" searches for the areas that are divisible by "burst dim" and it outputs a vector with such divisible areas, with the minimum i = 0,1,2,3 by storing in the output vector "mult_vector" the couples (area, minimum i).

For example, if "burst_area_vector=[29 22 1 3 7 16 18 23 9]" and "Dim=10", the result of the procedure "find_multiples" is: "mult_vector = [(29,1),(18,2), (7,3), (9,1)]" where the duple (area,minimum i) of each element of vector "mult_vector" indicates respectively the element of "burst_area_vector" and the added index of wasted slot "i" for each of the four returned rectangular burst areas. In another embodiment of the present invention the index "i" can run more than up to 3.

Thus, in step STi, the "find_multiple" procedure is invoked twice one for each dimension, i.e. for the horizontal dimension "mult_x= find_multiples(burst_area_vector, burst_dim_x)" and for the vertical dimentsion "mult_y= find_multiples(burst_area_vector, burst_dim_y)".

At step C1, it is verified whether the "find_multiples()" procedure was unsuccessful by checking if both of the two outputted vector results "mult_x" and "mult_y" give an empty vector. In such a case, i.e. "if(mult_x=0 & Mult_y=0) returns "TRUE" Y then step STd is performed otherwise, if the "find_multiple()" procedure was successful, step C2 is performed.

In step STd, the two variables "burst_dim_x" and "burst_dim_y" are decremented of one since none of the areas of the involved vectors was found of being multiple of "burst_dim_x" and "burst_dim_y" values and, subsequently, step C3 is performed.

In step C2, a comparison is performed between the sum of the areas of vector "mult_x" and of vector "mult_y". If ($\Sigma$ (areas in "mult_x") > E (areas in "mult_y")) returns "TRUE" Y, then step STx is performed otherwise step Sty is performed. Notice that the comparison of step C2 is performed on the net areas, i.e. the areas before addition of "i" wasted slots.

In steps STx, STy the divisible areas are mapped in the horizontal direction, i.e. x-axis t, and vertical direction, y-axis f, respectively.

More in particular, in step STx the following sub-steps are performed:

STx1) the variable "direction" is set to x-axis by performing the assignment "direction=horizontal";
STx2) the areas of vector "mult_x" are placed along the horizontal direction on the sub-frame DL_F by invoking procedure "map(mult_x, direction)";
STx3) the mapped areas of vector "mult_x" are deleted from vector "burst_area_vector" by invoking procedure "update_areas(mult_x)";
STx4) the height of the mappable sub-frame area A is updated by subtracting from variable "burst_dim_y" the total heights of the mapped bursts by invoking procedure "update_side(burst_dim_y, direction)";
STx5) the width of the mappable sub-frame area A is updated by decrementing of one the variable "burst_dim_x", i.e. the assignment "burst_dim_x= burst_dim_x-1" is performed

Similarly, in step STy the following sub-steps are performed:

STy1) the variable "direction" is set to y axis by performing the assignment "direction=vertical";
STy2) the areas of vector "mult_y" are placed along the vertical direction on the sub-frame DL_F by invoking procedure "map(mult_y, direction)";
STy3) the mapped areas of vector "mult_y" are deleted from vector "burst_area_vector" by invoking procedure "update_areas (mult_y)";
STy4) the width of the mappable sub-frame area A is updated by subtracting from variable "burst_dim_x" the total widths of the mapped bursts by invoking "update_side(burst_dim_x, direction)";
STy5) the height of the mappable sub-frame area A is updated by decrementing of one variable "burst_dim_y", i.e. the assignment "burst_dim_y= burst_dim_y-1" is performed

In the procedure "map(mult, direction)", performed in sub-steps STx2) and STy2) the following sub-steps are performed for the horizontal and the vertical directions respectively.
For the horizontal direction:

- the dimensions "burst_width", "burst_heigh" of each rectangular burst area "Area" contained in vector "mult_x" are calculated by performing the following two assignments "burst_width= burst_dim_x" and "burst_height=(Area+i)/ burst_dim_x" where "i" represents the value in [0 1 2 3] added to area "Area" in order to obtain a multiple of variable "burst_dim_x";
- every calculated rectangular burst is placed one below to the other, orientated along the horizontal direction, on the free sub-frame area A.

Similarly, for the vertical direction:

- the dimensions "burst_width", "burst_heigh" of each burst area "Area" contained in "mult_y" are calculated by performing the following two assignments "burst_height= burst_dim_y" and "burst_width =(Area+i)/burst_dim_y" where "i" represents the value in [0 1 2 3] added to area in order to obtain a multiple of variable "burst_dim_y";
- every calculated rectangular burst is placed one beside the other, orientated along the vertical direction, on the free sub-frame area A.

After anyone of steps STx, Sty or STd is performed, step C3 is performed.
In step C3, a conditional check whether the algorithm execution is to be terminated is done. In case the execution is to be terminated, step END is performed otherwise a new iteration is performed starting from step STi until back to step C3.
In step END, the execution of the algorithm is terminated by invoking procedure "stop_mapping". The conditional check performed in step C3 can be mathematically formulated as follows:
"if((burst_area_vector≠0)&(burst_dim_x>0)&(burst_dim y>0))" return "TRUE" Y step STi is performed otherwise step END is performed.
Figure 6 illustrates a simplified numerical example in which a mappable sub-frame area A having width of 10 and length of 15 (see Figure 6a) is mapped with rectangular bursts through the MA algorithm according to an advantageous embodiment of the present invention.
In the shown numerical example, inputs of the MA algorithm are:

- "burst_area_vector = [29 22 1 3 7 16 18 23 9]";
- Sub-frame width "W = 10";

**EP 1 926 271 A1**

- Sub-frame height "H = 15".

In step INIT, variable "burst_dim_x" and "burst_dim_y" are assigned:

- "burst_dim_x=10";
- "burst-dim-y=15";

In step STi, the "find_multiples" procedure is invoked twice for the two directions:

- "mult_x = find_multiples([29 22 1 3 7 16 18 23 9], horizontal)" → the obtained output is "mult_x = [(29,1), (18,2) (7,3) (9,1)]";
- "mult_y = find_multiples([29 22 1 3 7 16 18 23 9], vertical)" → the obtained output is "mult_y = [(29,1)]".

In step C1, the condition (Mult_x=0 & Mult_y=0) returns "FALSE" N therefore step C2 is performed.
In step C2, the condition (E (areas in mult_x) > E (areas in mult_y)) is fulfilled Y, in fact (29+18+7+9) is greater than (29), and, as a consequence, step STx is performed.
In step STx, the procedure "map(mult_x, horizontal)" is invoked for the horizontal direction and the variables "burst_area_vector", "burst_dim_y", "burst_dim_x" are consequently updated:

- in substep STx2, procedure "map(mult_x, horizontal)" is invoked;
- in substep STx3, procedure "update_areas (mult_x)" is invoked → the updated "burst_area_vector" is [22 1 3 16 23] ;
- in substep STx4, the new value of "burst_dim_y" is calculated by making the assignment "burst_dim_y=15-(30+20+10+10)/10=8";
- in substep STx5, the new value of "burst_dim_x" is calculated by making the assignment "burst_dim_x=10- 1=9".

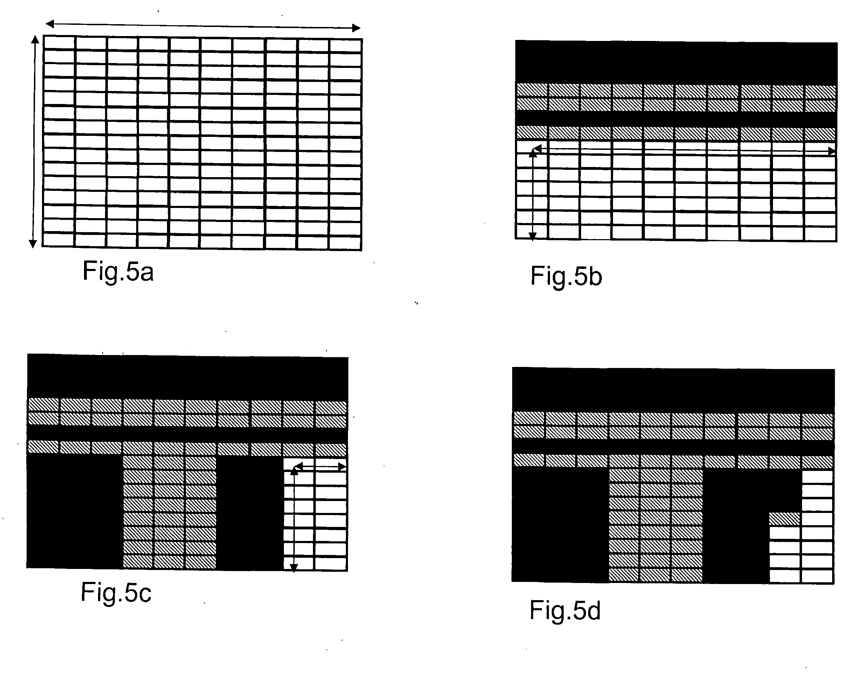

Thus, in step STx four rectangular bursts having width of 10 x-axis units are placed one below the other, orientated along the horizontal direction as shown in Figure 5b, wherein the four rectangular bursts are denoted with black and shaded filling.
More in particular, the following four rectangular bursts have been placed:

- a first rectangular burst, with 10x3 dimensions, filled with black, containing 1 wasted slot;
- a second rectangular burst, with 10x2 dimensions, filled with shaded pattern, containing 2 wasted slots;
- a third rectangular burst, with 10x1 dimensions, filled with black, containing 3 wasted slots;
- a fourth rectangular burst, with 10x1 dimensions, filled with shaded pattern, containing 1 wasted slot.

After performing step STx, the MA algorithm performs step C3 whose output result is "TRUE" Y since the condition "(burst_area_vector≠0)&(burst_dim_x>0)&(burst_dim_y>0))" is fulfilled and as a consequence step STi is performed, i.e. a second iteration of the MA algorithm.
In the second iteration of step STi, the "find_multiple" procedure is invoked twice for the two directions, this time the sub-frame area A to be mapped has dimensions (burst_dim_x,burst_dim_y) =(9,8) as represented by the arrows of Figure 6b:

- "mult_x = find_multiples([22 1 3 16 23], horizontal)" → the obtained output is "mult_x = [(16,2)]";
- "mult_y = find_multiples([22 1 3 16 23], vertical)" → the obtained output is "mult_y = [(22,2) (23,1) (16,0)]".

In step C1, the condition "(mult_x=0 & mult_y=0)" returns "FALSE" N, therefore step C2 is performed.
In step C2, the condition "(Σ (areas in mult_x) > E (areas in mult_y) )" is not fulfilled N, in fact (16) is not greater than (22+23+16), and, as a consequence, step STy is performed.
In step STy, the procedure "map(mult_y, vertical)" is invoked for the vertical direction and the variables "burst_area_vector", "burst_dim_y", "burst_dim_x" are consequently updated:

- in substep STy2, procedure "map(mult_y, vertical)" is invoked;
- in substep STy3, procedure "update_areas(mult_y)" is invoked → the updated burst_area_vector is [1 3];
- in substep STy4, the new value of "burst_dim_x" is calculated by making the assignment "burst_dim_x= 9- (24+24+16)/8=1" ;
- in substep STy5, the new value of "burst_dim_y" is calculated by making the assignment "burst_dim_y= 8- 1=7".

Thus, in step STy three rectangular bursts having height of 8 y-axis units are placed one beside the other, orientated along the vertical direction as shown in Figure 5c, wherein the three rectangular bursts are denoted with black and shaded filling.

More in particular, the following three rectangular bursts have been placed:

- a first rectangular burst, with 3x8 dimensions, filled with black, containing 2 wasted slot;
- a second rectangular burst, with 3x8 dimensions, filled with shaded pattern, containing 1 wasted slots;
- a third rectangular burst, with 2x8 dimensions, filled with black, containing 0 wasted slots.

After performing step STy, the MA algorithm performs step C3 whose output condition result is "TRUE" Y since the condition "(burst_area_vector≠0)&(burst_dim_x>0)&(burst_dim_y>0))" is fulfilled and as a consequence step STi is performed, i.e. a third iteration of the MA algorithm.

In the third iteration of step STi, the "find_multiple" procedure is invoked twice for the two directions, this time the sub-frame area A to be mapped has dimensions (burst_dim_x,burst_dim_y) =(1,7) as represented by the arrows of Figure 5c:

- "mult_x = find_multiples([1 3], horizontal) → the obtained output is "mult_x = [(3,0) (1,0)]";
- "mult_y = find_multiples([1 3], vertical)" → the obtained output is "mult_y = []".

In step C1, the condition "(mult_x=0 & mult_y=0)" returns "FALSE" N therefore step C2 is performed.

In step C2, the condition "(Σ (areas in mult_x) > E (areas in mult_y))" is fulfilled Y, in fact (3+1) is greater than (0), and, as a consequence, step STx is performed.

In step STx, the procedure "map(mult_x, horizontal)" is invoked for the horizontal direction and the variables "burst_area_vector", "burst_dim_y", "burst_dim_x" are consequently updated:

- in substep STx2, procedure "map(mult_x, horizontal)" is invoked;
- in substep STx3, procedure "update_areas (mult_x)" is invoked → the updated burst_area_vector is [];
- in substep STx4, the new value of "burst_dim_y" is calculated by making the assignment "burst_dim_y=7-(3+1)/1=3" ;
- in substep STx5, the new value of "burst_dim_x" is calculated by making the assignment "burst_dim_x=1- 1=0".

Thus, in step STx two rectangular bursts having width of 1 x-axis unit are placed one below the other, orientated along the horizontal direction as shown in Figure 5d, wherein the three rectangular bursts are denoted with black and shaded filling.

More in particular, the following two rectangular bursts have been placed:

- a first rectangular burst, with 1x3 dimensions, filled with black, containing 0 wasted slots;
- a second rectangular burst, with 1x1 dimensions, filled with shaded pattern, containing 0 wasted slots.

After performing step STx, the MA algorithm performs step C3 whose output condition result is "FALSE" N since the condition "(burst_area_vector≠0)&(burst_dim_x>0)&(burst_dim_y>0))" is not fulfilled and as a consequence step STOP is performed, the termination of the execution of the MA algorithm.

In the example embodiment of Figure 5, all the input bursts have been mapped.

Advantageously, the non-mapped area of the sub-frame DL_F is compacted in a corner and it can be re-utilized for lower QoS data.

It is apparent that there has been disclosed a method and a system for data mapping that fully satisfy the objects, means, and advantages set forth hereinbefore

The teachings of the embodiments of the present invention can be applied to any telecommunication system who is required t map bidimensional time-frequency data in form of rectangular shapes on bidimensional time-frequency sub-frames.

**List of reference signs**

| | |
|---|---|
| A | mappable area |
| BC | burst creation module |
| BM | burst mapping module |
| DM | downlink map field |
| FCH | Frame Control Header |

| f | frequency axis |
|---|---|
| H | mappable area height |
| PS | packet selection module |
| SCH | scheduler module |
| DL_F | downlink sub-frame |
| UL_F | uplink sub-frame |
| B1,..,B5 | burst, data region |
| SL | slot |
| t | time axis |
| W | mappable area width |
| WS | wasted slot |

| C1 | conditional check on the successful result of the procedure "find_multiples()" |
|---|---|
| C2 | comparison check on the two outputted results of the procedure "find_multiples" |
| C3 | conditional check on MA algorithm termination |
| END | step of terminating MA algorithm |
| INIT | step of initializing variables "burst_dim_x", "burst_dim_y" |
| STd | step of decrementing variables "burst_dim_x", "burst_dim_y" |
| STi | step of invoking procedure "find_multiples()" |
| STx | step of horizontal mapping and of variable updating |
| STy | step of vertical mapping and of variable updating |
| Y | check C1, C2 or C3 returns "TRUE" |
| N | check C1, C2 or C3 returns "FALSE" |

**List of used acronyms**

| CID | Connection Identifier |
|---|---|
| DL | downlink |
| MAC | Media Access Control |
| MCS | Modulation and Coding Scheme |
| OFDMA | Orthogonal Frequency Division Multiple Access |
| PDU | Protocol Data Unit |
| PUSC | Partial Usage of Subchannels |
| QoS | Quality of Service |
| QPSK | Quadrature Phase Shift Keying |
| SDU | Service Data Unit |
| TDD | Time Division Duplex |
| UL | Uplink |
| WiMAX | Worldwide Interoperability for Microwave Access |

**List of used industry specifications**

[1] 802.16e IEEE
IEEE Standard for Local and Metropolitan Area Networks
Part 16: Air Interface for Fixed and Mobile Broadband Wireless Access Systems

**Claims**

1. A method for data mapping in a telecommunication system in which data to be transmitted is in form of a tuple of areas to be placed in a bidimensional subplane, having an x-axis (t) and an y-axis (f), of a sub-frame (DL_F); the areas within said tuple are to be placed in form of rectangular shaped areas (B1,..,B5) within a rectangular shaped region of said sub-frame (DL_F) having a predefined width (W) and height (H); said method **characterized in that** it is an iterative method that at each step maps on the sub-frame (DL_F) the areas still to be mapped in form of rectangular shaped areas (B1,..,B5) of equal or greater areas, having at least one dimension multiple of one of horizontal and vertical dimensions of a remaining free mappable area (A) of the sub-frame (DL_F).

2. The method of claim 1, further comprising the steps of:

i) defining an horizontal dimension variable, herein after denoted as burst_dim_x, whose value is related to the width of the free mappable area (A) of the sub-frame (DL_F) ;
ii) defining a vertical dimension variable, herein after denoted as burst_dim_y, whose value is related to the height of the free mappable area (A) of the sub-frame (DL_F) ;
iii) initializing (INIT) the variables burst_dim_x and burst_dim_y to said predefined sub-frame width (W) and to said predefined sub-frame height (H) respectively;
iv) defining (STi) an additional set of tuples of areas obtained from said tuple of areas by adding an integer i to each of the areas of said tuple of areas, wherein the integer i includes the value zero;
v) searching (STi) for a tuple of horizontal multiples, herein after denoted as mult_x, by searching for multiples of variable burst_dim_x within said tuple of areas and within said additional set of tuples of areas and by selecting the multiples having minimum integer i; wherein said tuple mult_x is composed of couples <area, i> such that value area+i is a multiple of the variable burst_dim_x;
vi) searching (STi) for a tuple of vertical multiples, herein after denoted as mult_y, by searching for multiples of variable burst_dim_y within said tuple of areas and within said additional set of tuples of areas and by selecting the multiples having minimum integer i; wherein said tuple mult_y is composed of couples <area, i> such that value area+i is a multiple of the variable burst_dim_y;
vii) checking (C1) whether at least one of the tuples mult_x and mult_y found in steps v) and vi) are non empty;
viii) if step vii) is fulfilled (N), then step ix) is performed otherwise a jump to step xix) is performed;
ix) checking (C2) whether the sum of the areas associated to tuple mult_x is greater than the sum of the areas associated to tuple mult_y;
x) if step ix) is fulfilled (Y), then step xi) is performed otherwise a jump to step xv) is performed;
xi) calculating (STx) the height of the rectangular shaped areas (B1,..,B5) associated to the tuple mult_x; each of said rectangular shaped areas (B1,..,B5) having a width equal to burst_dim_x value;
xii) mapping the data by placing (STx) the rectangular shaped areas (B1,..,B5) horizontally within the free mappable area (A); and updating said tuple of areas by deleting from it the elements associated to said tuple mult_x;
xiii) updating (STx) variable burst_dim_y by subtracting all the heights of the rectangular shaped areas (B1,.., B5) mapped at step xii);
xiv) updating (STx) variable burst_dim_x by decrementing it of one unit; and performing a jump to step xx);
xv) calculating (STy) the width of the rectangular shaped areas (B1,..,B5) associated to the tuple mult_y; each of said rectangular shaped areas (B1,..,B5) having a height equal to burst_dim_y value;
xvi) mapping the data by placing (STy) the rectangular shaped areas (B1,..,B5) vertically within the free mappable area (A); and updating said tuple of areas by deleting from it the elements associated to said tuple mult_y;
xvii) updating (STy) variable burst_dim_x by subtracting all the widths of the rectangular shaped areas (B1,.., B5) mapped at step xvi);
xviii) updating (STy) variable burst_dim_y by decrementing it of one unit; and performing a jump to step xx);
xix) updating (STd) variables burst_dim_x and burst_dim_y by decrementing each of them of one unit;
xx) checking (C3) if terminating condition is not reached;
xxi) if step xx) is fulfilled (N), then a new iteration is performed starting from step iv).

3. The method according to claim 2, wherein in step xi) said height is calculated for each area of the tuples of areas associated to tuple mult_x as follows:

$$height = (area+i)/burst\_dim\_x.$$

4. The method according to any of the claims 2 to 3, wherein in step xv) said width is calculated for each area of the tuples of areas associated to tuple mult_x as follows:

$$width = (area+i)/burst\_dim\_y.$$

5. The method according to any of according to any of the claims 2 to 4, wherein said integer i is set to 0,1,2 and 3.

6. The method according to any of the claims 2 to 5, wherein said telecommunication system is a WiMAX system.

7. The method according to any of the claims 2 to 6, wherein said sub-frame is a downlink sub-frame.

8. The method according to any of the claims 2 to 7, wherein the downlink sub-frame follows PUSC subcarrier allocation mode.

9. The method according to any of the claims preceding claims, wherein the x-axis (t) unit is an OFDMA symbol unit and the y-axis (f) unit is a subchannel unit and a downlink slot is composed of one subchannel x two OFDMA symbols.

10. The method according to any of the claims 2 to 9, wherein said termination condition of step xx) is fulfilled when said tuple of area is an empty tuple or when any of variables burst_dim_x, burst_dim_y is equal to zero.

11. A system having means for performing the steps of the method according to any of the claims 1 to 10.

Fig.1

Fig.2

Fig.3

Fig.4

Fig.5b

Fig.5d

Fig.5a

Fig.5c

**European Patent Office**

**EUROPEAN SEARCH REPORT**

Application Number

EP 06 42 5806

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 680 168 A2 (AT & T CORP [US]) 2 November 1995 (1995-11-02) * abstract; figure 5 * * column 4, line 41 - column 6, line 15 * ----- | 1,11 | INV. H04L27/26 |
| X | US 2006/007849 A1 (KIM IL-WHAN [KR] ET AL) 12 January 2006 (2006-01-12) * paragraphs [0038] - [0043]; figures 3,4 * ----- | 1,11 | |
| X | KI-HOLEEETAL: "Overlapped two-dimensional resource allocation scheme in OFDMA DL-MAP" INTERNET CITATION, [Online] 29 August 2004 (2004-08-29), XP007902313 Retrieved from the Internet: URL:http://ieee802.org/16/tge/contrib/C802 16e-04_352r2.pdf> [retrieved on 2007-05-14] * the whole document * ----- | 1,11 | |
| X | HASSAN YAGHOOBI: "Scalable OFDMA Physical Layer in IEEE 802.16 Wireless MAN" EUROPEAN RADIOLOGY, SPRINGER INTERNATIONAL, BERLIN, DE, vol. 8, no. 3, 20 August 2004 (2004-08-20), pages 1-14, XP002407819 ISSN: 0938-7994 * pages 203-204 * ----- | 1,11 | TECHNICAL FIELDS SEARCHED (IPC) H04B H04L |
| A | WO 03/003617 A (SEPURA LTD [GB]; BALL DIANA MARGARET [GB]; RAYNE MARK WENTWORTH [GB];) 9 January 2003 (2003-01-09) * page 24, line 19 - page 26, line 4; figures 2,3 * * page 29, line 22 - page 31, line 16; figures 11,12 * ----- | 1-11 | |

The present search report has been drawn up for all claims

| Place of search | Date of completion of the search | Examiner |
|---|---|---|
| Munich | 18 May 2007 | Horbach, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 42 5806

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2007

| Patent document cited in search report | | Publication date | Patent family member(s) | | Publication date |
|---|---|---|---|---|---|
| EP 0680168 | A2 | 02-11-1995 | CA | 2145700 A1 | 29-10-1995 |
| | | | DE | 69535010 T2 | 11-01-2007 |
| | | | JP | 7303090 A | 14-11-1995 |
| | | | US | 6064662 A | 16-05-2000 |
| | | | US | 6018528 A | 25-01-2000 |
| US 2006007849 | A1 | 12-01-2006 | CN | 1719930 A | 11-01-2006 |
| | | | EP | 1744511 A1 | 17-01-2007 |
| | | | KR | 20060004870 A | 16-01-2006 |
| WO 03003617 | A | 09-01-2003 | GB | 2378860 A | 19-02-2003 |

EPO FORM P0459

For more details about this annex : see Official Journal of the European Patent Office, No. 12/82